(19) Europäisches Patentamt / European Patent Office / Office européen des brevets

(11) **EP 4 693 831 A1**

(12) **EUROPEAN PATENT APPLICATION**
published in accordance with Art. 153(4) EPC

(43) Date of publication:
**11.02.2026 Bulletin 2026/07**

(21) Application number: **24784821.1**

(22) Date of filing: **28.03.2024**

(51) International Patent Classification (IPC):
**H02K 1/276** (2022.01)

(52) Cooperative Patent Classification (CPC):
**H02K 1/276**

(86) International application number:
**PCT/JP2024/012602**

(87) International publication number:
**WO 2024/210032 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.04.2023 JP 2023060099**

(71) Applicant: **NIPPON STEEL CORPORATION**
**Chiyoda-ku**
**Tokyo 100-8071 (JP)**

(72) Inventor: **HONMA, Rei**
**Tokyo 100-8071 (JP)**

(74) Representative: **Vossius & Partner**
**Patentanwälte Rechtsanwälte mbB**
**Siebertstrasse 3**
**81675 München (DE)**

(54) **ROTOR CORE, ROTOR, ROTARY ELECTRIC MACHINE, AND DESIGNING METHOD FOR ROTOR CORE**

(57) A rotor core (31) includes a front bridge (37f) provided between an outer circumferential surface (31a) of the rotor core (31) and a front flux barrier (35f) and a rear bridge (37r) provided between the outer circumferential surface (31a) of the rotor core (31) and the rear flux barrier (35r). A relative location of a central location $\theta r$ of the rear bridge (37r) to a rear reference location $\theta sr$ of the rear flux barrier (35r) is located rotationally rearward relative to a relative location of a central location $\theta f$ of the front bridge (37f) to a front reference location $\theta sf$ of the front flux barrier (35f). A width Wf of the front bridge (37f) is different from a width Wr of the rear bridge (37r).

FIG. 3

EP 4 693 831 A1

# EP 4 693 831 A1

**Description**

TECHNICAL FIELD

The present invention relates to a rotor core, a rotor, a rotary electric machine, and a designing method for the rotor core.

Priority is claimed on Japanese Patent Application No. 2023-060099, filed April 3, 2023, the content of which is incorporated herein by reference.

BACKGROUND ART

In the related art, for example, a rotary electric machine described in Patent Document 1 below is known.

Citation List

Patent Document

Patent Document 1: Japanese Unexamined Patent Application, First Publication No. 2020-162379

SUMMARY OF INVENTION

Technical Problem

In such a type of interior permanent magnet synchronous motor (IPMSM), there is a growing demand for practical implementation of techniques capable of curbing torque pulsation (torque ripple).

The present invention has been made in view of the above-described circumstance, and an object of the present invention is to reduce torque pulsation.

Solution to Problem

<1> A rotor core according to an aspect of the present invention is a rotor core used in an interior permanent magnet motor. A plurality of sets of permanent magnets forming magnetic poles are disposed in the rotor core in a circumferential direction of the rotor core. A plurality of insertion holes which penetrate through the rotor core in an axial direction of the rotor core and into which the permanent magnets are inserted are formed in the rotor core. A flux barrier which is provided corresponding to at least one magnetic pole among the plurality of magnetic poles and penetrates through the rotor core in the axial direction is formed in the rotor core. The flux barrier includes a front flux barrier and a rear flux barrier provided corresponding to the magnetic poles. The insertion holes include a first insertion hole into which the permanent magnet disposed closer to a rotational forward side among the magnetic poles is inserted and a second insertion hole into which the permanent magnet disposed closer to a rotational rearward side among the magnetic poles is inserted. The front flux barrier is provided, with respect to the first insertion hole, outside in a radial direction of the rotor core and on the rotational forward side and connected to the first insertion hole. The rear flux barrier is provided, with respect to the second insertion hole, outside in the radial direction of the rotor core and on the rotational rearward side and connected to the second insertion hole. The rotor core includes a front bridge provided between an outer circumferential surface of the rotor core and the front flux barrier and a rear bridge provided between an outer circumferential surface of the rotor core and the rear flux barrier. A relative location of a central location $\theta r$ of the rear bridge to a rear reference location $\theta sr$ of the rear flux barrier is located rotationally rearward relative to a relative location of a central location $\theta f$ of the front bridge to a front reference location $\theta sf$ of the front flux barrier. A width $Wf$ of the front bridge is different from a width $Wr$ of the rear bridge.

Here, the width $Wf$ of the front bridge is defined by a central angle formed by the front bridge. The width $Wr$ of the rear bridge is defined by a central angle formed by the rear bridge.

<2> In the rotor core according to <1>, the width $Wr$ of the rear bridge may be greater than the width $Wf$ of the front bridge.

<3> A rotor according to another aspect of the present invention includes the rotor core according to <1> or <2>; and a plurality of sets of permanent magnets embedded in the rotor core, forming a magnetic pole, and disposed in the rotor core in a circumferential direction of the rotor core.

<4> A rotary electric machine according to still another aspect of the present invention includes an annular stator and

the rotor according to <3> disposed in the stator.

<5> In the rotary electric machine according to <4>, the rotor core may include a front bridge provided between an outer circumferential surface of the rotor core and the front flux barrier and a rear bridge provided between the outer circumferential surface of the rotor core and the rear flux barrier. When a central angle $\theta s$ per slot of the stator is $\theta s = 2\pi/Nslot$ [rad] (where Nslot represents the number of slots of the stator), a central location $\theta r$ of the rear bridge may be located within a first range indicated using the central angle $\theta s$ with respect to a rear reference location $\theta sr$ of the rear flux barrier, the central location $\theta f$ of the front bridge may be located within a second range indicated using the central angle $\theta s$ with respect to a front reference location $\theta sf$ of the front flux barrier, and the first and second ranges may be different in accordance with a width Wf of the front bridge and a width Wr of the rear bridge.

<6> In the rotary electric machine according to <5>, when the width Wf of the front bridge is $\theta s/8$ to $5\theta s/24$ and the width Wr of the rear bridge is $7\theta s/24$ to $3\theta s/8$, the first range may be $-\theta s/6$ to $-\theta s/8$ and the second range may be $-\theta s/24$ to $\theta s/24$, or the first range may be $-\theta s/8$ to $-\theta s/12$ and the second range may be $-\theta s/24$ to $\theta s/12$.

<7> In the rotary electric machine according to <5>, when the width Wf of the front bridge is $\theta s/8$ to $5\theta s/24$ and the width Wr of the rear bridge is $3\theta s/8$ to $11\theta s/24$, the first range may be $-\theta s/8$ to $-\theta s/24$, and the second range may be $-\theta s/24$ to $\theta s/12$.

<8> In the rotary electric machine according to <5>, when the width Wf of the front bridge is $5\theta s/24$ to $7\theta s/24$ and the width Wr of the rear bridge is $7\theta s/24$ to $3\theta s/8$, the first range may be $-\theta s/6$ to $-\theta s/8$ and the second range may be $-\theta s/24$ to $\theta s/12$, the first range may be $-\theta s/8$ to $-\theta s/12$ and the second range may be $0$ to $5\theta s/24$, or the first range may be $-\theta s/12$ to $-\theta s/24$ and the second range may be $\theta s/24$ to $5\theta s/24$.

<9> In the rotary electric machine according to <5>, when the width Wf of the front bridge is $5\theta s/24$ to $7\theta s/24$ and the width Wr of the rear bridge is $3\theta s/8$ to $11\theta s/24$, the first range may be $-\theta s/6$ to $-\theta s/8$ and the second range may be $-\theta s/12$ to $0$, the first range may be $-\theta s/8$ to $-\theta s/12$ and the second range may be $-\theta s/12$ to $6s/24$, or the first range may be $-\theta s/12$ to $-\theta s/24$ and the second range may be $-\theta s/24$ to $\theta s/8$.

<10> A designing method for the rotor core according to the aspect of the present invention is a designing method for the rotor core according to any one of the aspects <1> to <3>, and includes a step of designing a position and a shape with respect to the front flux barrier and the rear flux barrier based on a magnetic flux at the magnetic pole.

<11> In the designing method for the rotor core according to <10>, in the step, the position and shape of the front and rear flux barriers may be designed such that, when torque becomes minimum, the rear flux barrier may block a magnetic flux path in front of a tooth located closest to the rear flux barrier and the front flux barrier may not block a magnetic flux oriented from a rotational rearward side to a tooth located closest to the front flux barrier, and when the torque becomes maximum, the rear flux barrier blocks a magnetic flux path entering the tooth located closest to the rear flux barrier from the rotational rearward side, and the front flux barrier may not block the magnetic flux path in front of the tooth located closest to the front flux barrier to widen the magnetic flux path in front of the tooth.

Advantageous Effects of Invention

According to the present invention, torque pulsation is reduced.

BRIEF DESCRIPTION OF DRAWINGS

[FIG. 1] A diagram illustrating a rotary electric machine according to an embodiment of the present invention and is a plan view including a partial cross section.

[FIG. 2] An enlarged plan view illustrating a stator and a rotor included in the rotary electric machine illustrated in FIG. 1.

[FIG. 3] An enlarged plan view illustrating the rotor included in the rotary electric machine illustrated in FIG. 1.

[FIG. 4] A plan view illustrating a front reference location of a front flux barrier and a rear reference location of a rear flux barrier based on a reference shape of a rotor.

[FIG. 5] A plan view illustrating a central location of a rear bridge and a central location of a front bridge provided in a rotor core.

[FIG. 6] A plan view illustrating a rear bridge width and a front bridge width of the rotor core.

[FIG. 7] A plan view illustrating a first reduction pattern of the rotor core.

[FIG. 8] A plan view illustrating a second reduction pattern of the rotor core.

[FIG. 9] A plan view illustrating a third reduction pattern of the rotor core.

[FIG. 10] A plan view illustrating a fourth reduction pattern of the rotor core.

[FIG. 11] A plan view illustrating a fifth reduction pattern of the rotor core.

[FIG. 12] A plan view illustrating a sixth reduction pattern of the rotor core.

[FIG. 13] A plan view illustrating a seventh reduction pattern of the rotor core.

[FIG. 14] A plan view illustrating an eighth reduction pattern of the rotor core.

[FIG. 15] A plan view illustrating a ninth reduction pattern of the rotor core.

[FIG. 16] A plan view illustrating a rotor capable of optimally reducing torque pulsation in a rotary electric machine according to an embodiment.

[FIG. 17] A plan view illustrating a rotor in which average torque becomes maximum in a rotary electric machine according to Comparative Example.

[FIG. 18] A graph illustrating a relationship between an electric angle and torque between the rotary electric machine according to the embodiment and the rotary electric machine according to Comparative Example.

[FIG. 19] A plan view illustrating a magnetic flux density vector when a rotor is positioned at an electric angle at which a torque waveform of the rotary electric machine according to Comparative Example becomes minimum in the rotary electric machine of the embodiment.

[FIG. 20] A plan view illustrating a magnetic flux density vector when a rotor is positioned at an electric angle at which the torque waveform becomes minimum in the rotary electric machine according to Comparative Example.

[FIG. 21] A plan view illustrating a magnetic flux density vector when a rotor is positioned at an electric angle at which the torque waveform of the rotary electric machine according to Comparative Example becomes maximum in the rotary electric machine according to the embodiment.

[FIG. 22] A plan view illustrating a magnetic flux density vector when a rotor is positioned at an electric angle at which the torque waveform becomes maximum in the rotary electric machine according to Comparative Example.

DESCRIPTION OF EMBODIMENTS

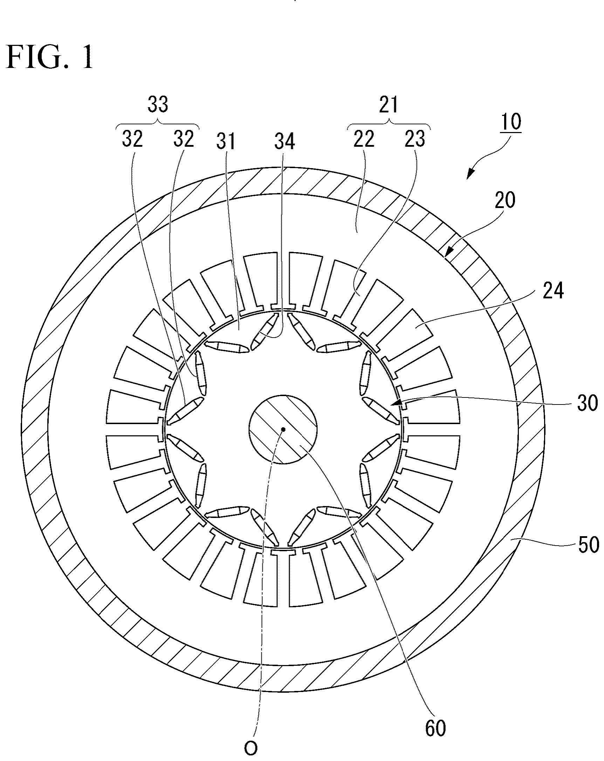

Hereinafter, a rotor core, a rotor, a rotary electric machine, and a designing method for the rotor core according to an embodiment of the present invention will be described with reference to FIGS. 1 to 22. The rotary electric machine is an electric motor, specifically, an AC electric motor, more specifically, a synchronous electric motor, and still more specifically, a permanent magnet field type electric motor. Such a type of electric motor is adopted appropriately in, for example, an electric vehicle.

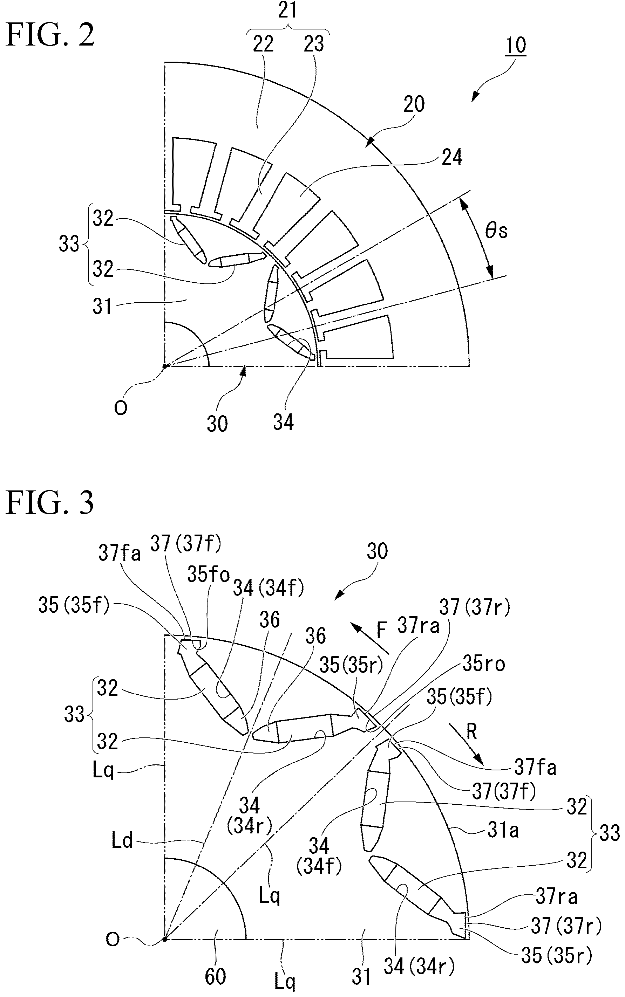

As illustrated in FIGS. 1 and 2, a rotary electric machine 10 includes a stator 20, a rotor 30, a case 50, and a rotary shaft 60. The stator 20 and the rotor 30 are housed in the case 50. The stator 20 is fixed to the case 50. The rotary electric machine 10 is of an inner rotor type in which the rotor 30 is located inside the stator 20.

In the embodiment, the rotary electric machine 10 is a three-phase AC motor that has eight poles and twenty four slots. However, for example, the number of poles, the number of slots, the number of phases, and the like can be changed appropriately.

In the rotary electric machine 10, the axes of the stator 20 and the rotor 30 are on a common axis. Hereinafter, this common axis is referred to as a central axis O (a center axis of the rotor 30). A direction of the central axis O (an axial direction of a rotor core 31 to be described below) is referred to as an axial direction, a direction orthogonal to the central axis O (a radial direction of the rotor core 31 described below) is referred to as a radial direction, and a direction circling around the central axis O (a circumferential direction of the rotor core 31 to be described below) is referred to as a circumferential direction.

The stator 20 includes a stator core 21 and a winding (not illustrated).

The stator core 21 includes a core back 22 (yoke) that has a cylindrical shape (cylinder shape) and a plurality of teeth 23.

The core back 22 is formed in an annular shape (annular shape) in a plan view of the rotary electric machine 10 viewed in the axial direction.

The plurality of teeth 23 protrude inward in the radial direction from the core back 22 (toward the central axis O of the core back 22 in the radial direction). The plurality of teeth 23 are disposed at equal intervals in the circumferential direction. In the embodiment, twenty four teeth 23 are provided at central angle intervals of 15 degrees about the central axis O. The plurality of teeth 23 are formed in the same shape and the same size. A slot 24 is formed between the teeth 23 adjacent in the circumferential direction.

The winding is wound around the tooth 23. The winding may be wound concentratedly or may be wound distributedly.

As illustrated in FIG. 3, the rotor 30 is disposed inward in the radial direction with respect to the stator 20 (the stator core 21). The rotor 30 includes the rotor core 31 and a plurality of permanent magnets 32.

The rotor core 31 is formed in a cylindrical shape (circular shape) disposed coaxially with the stator 20. The rotary shaft 60 is disposed in the rotor core 31. The rotary shaft 60 is fixed to the rotor core 31 to rotate together with the rotor core 31.

The plurality of permanent magnets 32 are fixed to the rotor core 31. In the rotor core 31, the plurality of magnetic poles 33 are formed. In the embodiment, a pair of permanent magnets 32 form one magnetic pole 33. The plurality of sets of permanent magnets 32 forming the plurality of magnetic poles 33 are arranged at equal intervals in the circumferential direction. In the embodiment, eight sets of (sixteen in total) permanent magnets 32 are provided every 45 degrees of the central angle about the central axis O.

The rotary electric machine 10 is an interior permanent magnet motor (IPMSM). A plurality of insertion holes 34 penetrating the rotor core 31 in the axial direction are formed in the rotor core 31. The plurality of insertion holes 34 are provided corresponding to the plurality of permanent magnets 32. Each permanent magnet 32 is fixed to the rotor core 31 while being inserted into the corresponding insertion hole 34. That is, the insertion hole 34 forms a space where the permanent magnet 32 can be installed. In the embodiment illustrated in FIG. 3, the permanent magnet 32 has a quadrangular shape that has a longitudinal direction, and the insertion hole 34 also has a shape including a similar quadrangular portion having a longitudinal direction. The fixing of each permanent magnet 32 to the rotor core 31 can be realized, for example, by bonding the outer surface of the permanent magnet 32 and the inner surface of the insertion hole 34 with an adhesive.

Stacked cores can be used as the stator core 21 and the rotor core 31. The stacked core is formed by stacking a plurality of electrical steel sheets. The stacked electrical steel sheets are fixed to each other by, for example, crimping, adhering, welding, or the like.

Each of the electrical steel sheets forming the stator core 21 and the rotor core 31 is formed by, for example, punching an electrical steel sheet serving as a base metal. As the electrical steel sheet, a known electrical steel sheet can be used. A chemical composition of the electrical steel sheet is not particularly limited. In the embodiment, a non-oriented electrical steel sheet is adopted as the electrical steel sheet. As the non-oriented electrical steel sheet, a non-oriented electric steel strip of JIS C 2552:2014 can be adopted. However, as the electrical steel sheet, a grain-oriented electrical steel sheet can be used instead of the non-oriented electrical steel sheet. As the grain-oriented electrical steel sheet, for example, a grain-oriented electric steel strip of JIS C 2553:2012 can be used.

In order to improve workability of the electrical steel sheet and iron loss of the stacked core, insulating coatings are provided on both surfaces of the electrical steel sheet. As a substance of the insulating coating, for example, (1) an inorganic compound, (2) an organic resin, or (3) a mixture of an inorganic compound and an organic resin can be applied. Examples of the inorganic compound include (1) complexes of a dichromate and boric acid and (2) complexes of a phosphate and silica. Examples of the organic resin include epoxy-based resins, acrylic resins, acrylic styrene-based resins, polyester-based resins, silicon-based resins, and fluorine-based resins.

Hereinafter, details of the rotor 30 will be described.

As illustrated in FIG. 3, the permanent magnets 32 are embedded in the rotor core 31 and two permanent magnets 32 are paired to form one magnetic pole 33, as described above. A plurality of pairs (eight pairs in the illustrated example) of permanent magnets 32 are disposed in the rotor core 31 in the circumferential direction. The position, size, and shape of the permanent magnet 32 are the same for all the magnetic poles 33. The shape of each magnetic pole 33 in a plan view is the same for all the magnetic poles 33. In the illustrated example, the permanent magnet 32 has a rectangular parallelepiped shape. The permanent magnet 32 has a rectangular shape in a plan view.

The pair of permanent magnets 32 is disposed in a V shape protruding inward in the radial direction in the plan view. The pair of permanent magnets 32 is disposed to be line-symmetrical with respect to the d-axis Ld in the plan view. The d-axis Ld passes through the central axis O and the circumferential center of each magnetic pole 33 in the plan view. Similarly, the insertion holes 34 in which the pair of permanent magnets 32 is arranged are disposed to be substantially line-symmetrical with respect to the d-axis Ld. Hereinafter, the d-axis Ld may be referred to as a "reference line Ld".

The insertion hole 34 is larger on both the q-axis Lq side and the d-axis Ld side than the permanent magnet 32 in the plan view. The insertion hole 34 includes a first insertion hole 34f and a second insertion hole 34r. The permanent magnet 32 disposed closer to the rotationally forward q-axis Lq (that is, closer to the rotational forward side) in each magnetic pole 33 is inserted into the first insertion hole 34f. The permanent magnet 32 disposed closer to the rotationally rearward q-axis Lq (that is, closer to the rotational rearward side) in each magnetic pole 33 is inserted into the second insertion hole 34r.

The q-axis Lq passes through the central axis O and between two magnetic poles 33 adjacent in the circumferential direction in the plan view. The q-axis Lq passes through the center in the circumferential direction between the two magnetic poles 33 in the plan view. The q-axis Lq and the d-axis Ld are magnetically and electrically orthogonal to each other. Portions of the insertion hole 34 located on the q-axis Lq side and the d-axis Ld side with respect to the permanent magnet 32 are flux barriers 35 and 36, respectively. In other words, the flux barriers 35 and 36 are disposed at both ends on the q-axis Lq side and the d-axis Ld side of the permanent magnet 32. The flux barriers 35 and 36 are magnetic voids penetrating through the rotor core 31 in the axial direction. Since the flux barriers 35 and 36 and the insertion hole 34 penetrate through the rotor core 31 in the axial direction, it is easy to manufacture the rotor core 31. It is preferable that the flux barriers 35 and 36 and the insertion hole 34 penetrate through the rotor core 31 over the entire length in the axial direction and are not divided into parts. The flux barriers 35 and 36 reduce the magnet magnetic flux (hereinafter also referred to as a reflux magnetic flux) from the permanent magnet 32 refluxing in the rotor 30 and change an inflow path of the magnet magnetic flux from the permanent magnet 32 to the stator 20. Accordingly, the magnet magnetic flux of the permanent magnet 32 (hereinafter simply referred to as a magnet magnetic flux) is effectively transmitted to the stator 20, which causes high torque to be output. It can also be said that the flux barriers 35 and 36 guide the magnet magnetic flux to the stator 20.

The rotor 30 includes a first flux barrier (flux barrier) 35 and a second flux barrier 36 as the flux barriers 35 and 36. In addition, the rotor 30 includes a plurality of bridges 37.

The first flux barrier 35 and the second flux barrier 36 sandwich the permanent magnet 32 from both ends in the longitudinal direction of the barriers. Accordingly, it is easy to effectively transmit the magnet magnetic flux to the stator 20. The first flux barrier 35 is located on the q-axis Lq side with respect to each permanent magnet 32. The first flux barrier 35 is located on both sides in the circumferential direction (rotational direction) of the pair of permanent magnets 32. The second flux barrier 36 is located on the d-axis Ld side with respect to each permanent magnet 32. The second flux barrier 36 is located at the center in the circumferential direction (rotational direction) of the pair of permanent magnets 32.

The pair of first flux barriers 35 located on the q-axis Lq side with respect to each permanent magnet 32 is disposed corresponding to the rotational forward and rearward sides of the magnetic pole 33. In the embodiment, an example in which the first flux barrier 35 is disposed in the rotational forward and rearward sides of all the magnetic poles 33 will be described, but the first flux barrier 35 may be disposed in the rotational forward and rearward sides of at least one magnetic pole 33.

Hereinafter, the forward side (rotational forward side) in the rotational direction (circumferential direction) of the rotary electric machine 10 is simply referred to as front F, and the rearward side in the rotational direction is simply referred to as rear R. In the case of the rotary electric machine 10 that can rotate in both directions about the central axis O, the rotational direction means a rotational direction in which the rotary electric machine 10 mainly rotates. In the illustrated example, the counterclockwise direction when the paper surface is viewed is referred to as the front F, and the clockwise direction is referred to as the rear R.

The first flux barrier 35 includes a front flux barrier 35f and a rear flux barrier 35r. The front flux barrier 35f is provided on the front F of the magnetic pole 33. The front flux barrier 35f is provided outward in the radial direction of the rotor core 31 and on the front F with respect to the first insertion hole 34f. The front flux barrier 35f is connected to the first insertion hole 34f.

The front flux barrier 35f has an outer circumferential side surface 35fo that is located outward in the radial direction. The outer circumferential side surface 35fo is located inward in the radial direction with respect to the outer circumferential surface 31a of the rotor core 31. The outer circumferential side surface 35fo is formed along the outer circumferential surface 31a. The fact that the outer circumferential side surface 35fo is along the outer circumferential surface 31a includes not only a case where the outer circumferential side surface 35fo is completely parallel to the outer circumferential surface 31a but also a case where the outer circumferential side surface 35fo is substantially parallel to the outer circumferential surface 31a. The case where the outer circumferential side surface 35fo is substantially parallel to the outer circumferential surface 31a includes a case where the outer circumferential surface 31a is arc-shaped and the outer circumferential side surface 35fo is linear and substantially parallel to the outer circumferential surface 31a. The fact that the outer circumferential side surface 35fo is substantially parallel to the outer circumferential surface 31a means that the radial length of the bridge 37 described later is substantially equal over the entire circumferential length of the bridge 37. The radial length of the bridge 37 is the absolute minimum value of the distance between each point on the outer circumferential side surface 35fo and the outer circumferential surface 31a. When the outer circumferential edge of the front flux barrier 35f does not have a portion parallel or substantially parallel to the outer circumferential surface 31a of the rotor core 31, the effect of the present invention cannot be obtained.

The rear flux barrier 35r is provided on the rear R of the magnetic pole 33. The rear flux barrier 35r is provided outside of the rotor core 31 in the radial direction and on the rear R with respect to the second insertion hole 34r. The rear flux barrier 35r is connected to the second insertion hole 34r.

The rear flux barrier 35r has an outer circumferential side surface 35ro located outward in the radial direction. The outer circumferential side surface 35ro is located inward in the radial direction with respect to the outer circumferential surface 31a of the rotor core 31. The outer circumferential side surface 35ro is formed along the outer circumferential surface 31a. The fact that the outer circumferential side surface 35ro is along the outer circumferential surface 31a includes not only a case where the outer circumferential side surface 35ro is completely parallel to the outer circumferential surface 31a but also a case where the outer circumferential side surface 35ro is substantially parallel to the outer circumferential surface 31a. The case where the outer circumferential side surface 35ro is substantially parallel to the outer circumferential surface 31a includes a case where the outer circumferential surface 31a is arc-shaped and the outer circumferential side surface 35ro is linear and substantially parallel to the outer circumferential surface 31a. The fact that the outer circumferential side surface 35ro is substantially parallel to the outer circumferential surface 31a means that the radial length of the bridge 37 described later is substantially equal over the entire circumferential length of the bridge 37. The radial length of the bridge 37 is set to the absolute minimum value of a distance between each point on the outer circumferential side surface 35ro and the outer circumferential surface 31a. When the outer circumferential edge of the rear flux barrier 35r does not have a portion parallel or substantially parallel to the outer circumferential surface 31a of the rotor core 31, the effect of the present invention cannot be obtained.

The rotor 30 includes a plurality of bridges 37. The bridge 37 includes a front bridge 37f and a rear bridge 37r. The front bridge 37f is provided between the outer circumferential surface 31a of the rotor core 31 and the outer circumferential side surface 35fo of the front flux barrier 35f. An inner circumferential side surface 37fa of the front bridge 37f is completely parallel or substantially parallel to the outer circumferential surface 31a of the rotor core 31. The rear bridge 37r is provided between the outer circumferential surface 31a of the rotor core 31 and the outer circumferential side surface 35ro of the rear flux barrier 35r. The inner circumferential side surface 37ra of the rear bridge 37r is completely parallel or substantially parallel to the outer circumferential surface 31a of the rotor core 31. The flux barrier is a non-magnetic region provided in the rotor core and has a function of preventing a magnetic flux. The bridge represents a portion connecting magnetic regions divided by the non-magnetic region and has a function of mechanically supporting the magnetic region and preventing passage of a magnetic flux by magnetic saturation of the bridge. In order to satisfy this function, the bridge is narrower than a surrounding magnetic region, and a maximum magnetic flux density in the bridge exceeds a saturation magnetic flux density. The maximum magnetic flux density in the bridge is ascertained by electromagnetic field analysis.

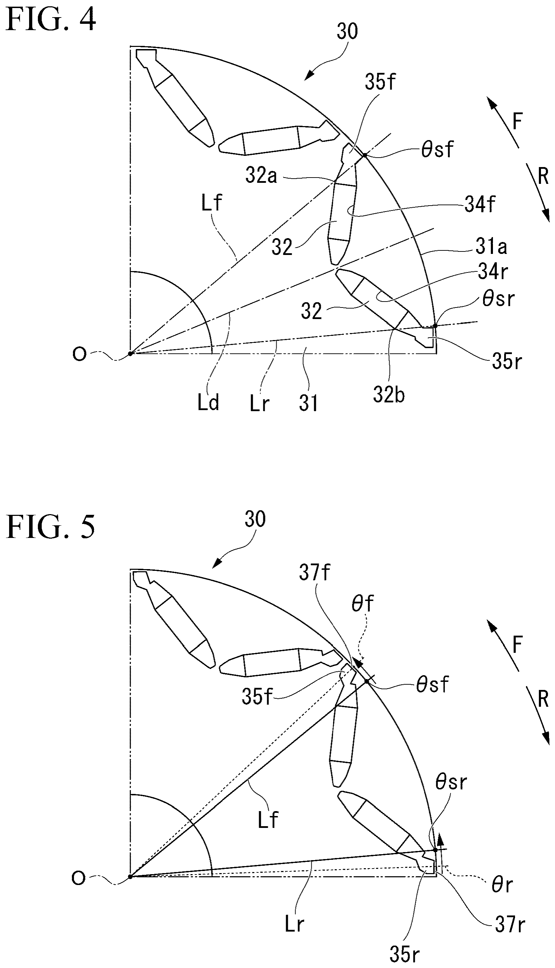

A position and a size of the bridge 37 vary depending on a position and a size of the flux barrier 35. For example, a width Wf of the front bridge 37f is expressed by a central angle formed by the front bridge. A width Wr of the rear bridge 37r is expressed by a central angle formed by the rear bridge. A circumferential central location θf (hereinafter also referred to as a central location θf of the front bridge 37f) of the front bridge 37f is expressed by an angle about the central axis O formed between the circumferential center of the outer circumferential side surface 35fo of the front flux barrier 35f and a front reference location θsf (see FIG. 5). The circumferential central location θr (Hereinafter also referred to as a central location θr of the rear bridge 37r) of the rear bridge 37r is expressed by an angle about the central axis O formed between the circumferential center of the outer circumferential side surface 35ro of the rear flux barrier 35r and a rear reference location θsr (see FIG. 5).

The central location θf of the front bridge 37f and the central location θr of the rear bridge 37r are positions that pass through the circumferential center of the magnetic pole 33 and are asymmetric with respect to the reference line Ld (d-axis) extending in the radial direction of the rotor core 31. Specifically, the central location θr of the rear bridge 37r is a position farther from the reference line Ld than the central location θf of the front bridge 37f in the circumferential direction. The relative location of the central location θr of the rear bridge 37r to the rear reference location θsr of the rear flux barrier 35r is located rotationally rearward with respect to a relative location of the central location θf of the front bridge 37f to the front reference location θsf of the front flux barrier 35f. The relative location of the central location θr of the rear bridge 37r to the rear reference location θsr of the rear flux barrier 35r is an angle about the central axis O between the rear reference location θsr of the rear flux barrier 35r and the central location θr of the rear bridge 37r. A relative location of the central location θf of the front bridge 37f to the front reference location θsf of the front flux barrier 35f is an angle about the central axis O formed between the front reference location θsf of the front flux barrier 35f and the central location θf of the front bridge 37f.

The width Wf of the front bridge 37f is different from the width Wr of the rear bridge 37r. Specifically, the width Wr of the rear bridge 37r (a central angle formed by the outer circumferential side surface 35ro of the rear flux barrier 35r) is greater than the width Wf of the front bridge 37f (the central angle formed by the outer circumferential side surface 35fo of the front flux barrier 35f) (where Wr>Wf).

The plurality of bridges 37 may prevent magnetic flux from passing through the bridges 37 by magnetic saturation. For example, when the rotor 30 rotates at a predetermined rotation speed or more, the bridge 37 may prevent magnetic flux from passing through the bridge 37 by magnetic saturation. When the rotor 30 rotates at a rotation speed less than the predetermined rotation speed, the magnetic flux may pass through the bridge 37. The circumferential length and a radial width (radial length) of the bridge 37 are designed appropriately according to a rotational speed and the shape of the rotary electric machine 10.

Hereinafter, shapes and positions of the front flux barrier 35f, the rear flux barrier 35r, the front bridge 37f, and the rear bridge 37r for reducing torque pulsation of the rotary electric machine (IPMSM) 10 will be described in detail.

(Reference Location of Flux Barrier)

First, the front reference location $\theta$sf of the front flux barrier 35f and the rear reference location $\theta$sr of the rear flux barrier 35r will be described based on the reference shape of the rotor 30 illustrated in FIG. 4. The front reference location $\theta$sf and the rear reference location $\theta$sr are positions serving as references when the shapes and positions of the front flux barrier 35f and the rear flux barrier 35r are determined.

The reference shape of the rotor 30 illustrated in FIG. 4 is obtained by optimizing the positions and widths of the front flux barrier 35f and the rear flux barrier 35r on the outer circumferential side of the magnet by parameter search (an analysis method described in Japanese Patent Application Laid-Open No. 2021 -114099) on the premise of symmetry in the circumferential direction of each magnetic pole 33.

As illustrated in FIG. 4, the front reference location $\theta$sf of the front flux barrier 35f is a position where a straight line Lf connecting the central axis O to a corner portion (a corner portion located on the frontmost side F in the circumferential direction) 32a on the front F and on the radially inner side in the permanent magnet 32 inserted into the first insertion hole 34f intersects the outer circumferential surface 31a of the rotor core 31. The rear reference location $\theta$sr of the rear flux barrier 35r is a position where a straight line Lr connecting the central axis O and a corner portion (a corner portion located rearmost side R in the circumferential direction) 32b on the rear R and on the radially inner side in the permanent magnet 32 inserted into the second insertion hole 34r intersects the outer circumferential surface 31a of the rotor core 31.

The front reference location $\theta$sf and the rear reference location $\theta$sr are disposed to be line-symmetrical with respect to the reference line Ld in a plan view. Here, the front reference location $\theta$sf and the rear reference location $\theta$sr may not be disposed to be line-symmetrical, as described above.

(Central Location of Bridge)

Next, the central location $\theta$f of the front bridge 37f and the central location $\theta$r of the rear bridge 37r will be described with reference to FIG. 5. The central location $\theta$f of the front bridge 37f and the central location $\theta$r of the rear bridge 37r are angles about the central axis O with reference to the front reference location $\theta$sf and the rear reference location $\theta$sr. As described above, the central location $\theta$f of the front bridge 37f is a center of the front bridge 37f in the circumferential direction. The central location $\theta$r of the rear bridge 37r is a center of the rear bridge 37r in the circumferential direction.

FIG. 5 is a diagram illustrating the central location $\theta$r of the rear bridge 37r and the central location $\theta$f of the front bridge 37f.

As illustrated in FIG. 5, the central location $\theta$r of the rear bridge 37r indicates a position away in the circumferential direction with respect to the rear reference location $\theta$sr of the rear flux barrier 35r. A position away to the front F with respect to the rear reference location $\theta$sr is indicated by positive (+), and a position away to the rear R is indicated by negative (-). The central location $\theta$r of the rear bridge 37r is located within a first range indicated using the central angle $\theta$s with respect to the rear reference location $\theta$sr of the rear flux barrier 35r.

Here, the central angle $\theta$s is expressed by the following formula.

$$\theta s = 2\pi/\text{Nslot [rad]} \text{ (where Nslot is the number of slots of the stator 20)}$$

The central location $\theta$f of the front bridge 37f indicates a position away in the circumferential direction with respect to the front reference location $\theta$sf of the front flux barrier 35f. A position away from the front F with respect to the front reference location $\theta$sf is indicated by positive (+), and a position away from the rear R is indicated by negative (-). The central location $\theta$f of the front bridge 37f is located within a second range indicated using the central angle $\theta$s with respect to the front reference location $\theta$sf of the front flux barrier 35f.

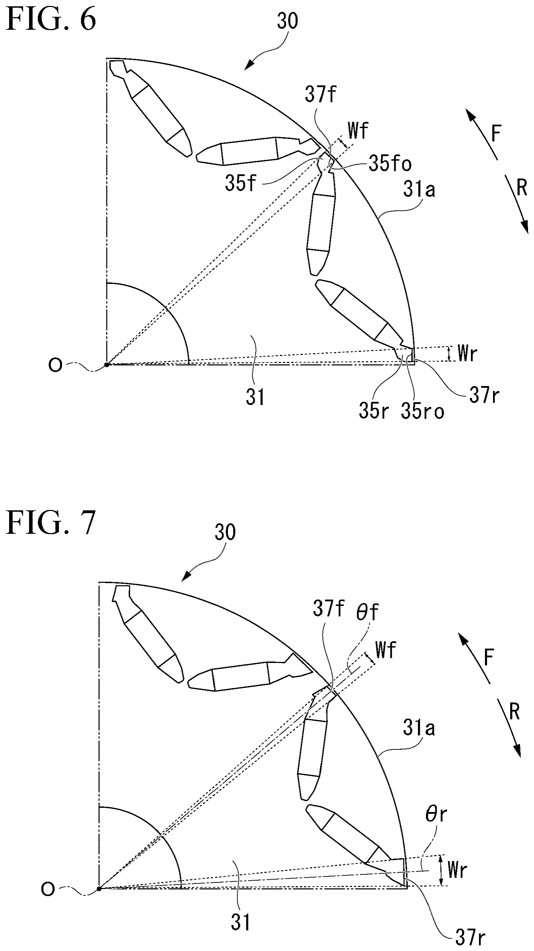

Next, shapes of the front bridge 37f and the rear bridge 37r will be described with reference to FIG. 6.

FIG. 6 is a diagram illustrating the width Wr of the rear bridge 37r and the width Wf of the front bridge 37f. Hereinafter, the width Wr of the rear bridge 37r may be referred to as a "rear bridge width Wr". The width Wf of the front bridge 37f may be referred to as a "front bridge width Wf".

As illustrated in FIG. 6, the rear bridge width Wr is expressed by an angle about the central axis O formed between an end portion of the front F and an end portion of the rear R of the rear bridge 37r. At this time, both the end portion of the front F and the end portion of the rear R of the rear bridge 37r are located on the outer circumferential side surface 35ro of the rear flux barrier 35r. The width Wr of the rear bridge 37r is expressed using the central angle θs, as will be described below.

The front bridge width Wf is expressed by an angle about the central axis O formed between the end portion of the front F and the end portion of the rear R of the front bridge 37f. At this time, both the end portion of the front F and the end portion of the rear R of the front bridge 37f are located on the outer circumferential side surface 35fo of the front flux barrier 35f. The width Wf of the front bridge 37f is expressed using the central angle θs, as will be described below.

As described above, a range in which the central location θr of the rear bridge 37r is located (hereinafter referred to as a first range) and a range in which the central location θf of the front bridge 37f is located (hereinafter referred to as a second range) are different in accordance with the front bridge width Wf and the rear bridge width Wr.

Considerably appropriate combination patterns of the rear bridge width Wr, the front bridge width Wf, the first range, and the second range of the rotor core 31 include first to ninth reduction patterns for reducing torque pulsation of the rotary electric machine (IPMSM) 10.

The first to ninth reduction patterns of the rotor core 31 for reducing the torque pulsation of the rotary electric machine 10 will be described with reference to FIGS. 7 to 15.

First, the first reduction pattern will be described with reference to FIG. 7. FIG. 7 illustrates the first reduction pattern for reducing torque pulsation of the rotary electric machine 10.

As illustrated in FIG. 7, in the first reduction pattern, when the front bridge width Wf is θs/8 to 5θs/24 and the rear bridge width Wr is 7θs/24 to 3θs/8, the first range in which the central location θr of the rear bridge 37r is located is -θs/6 to -θs/8. The second range in which the central location θf of the front bridge 37f is located is -θs/24 to θs/24.

In accordance with the first reduction pattern, the rear bridge width Wr is greater than the front bridge width Wf. Accordingly, the circumferential width of the rear flux barrier 35r is greater than the circumferential width of the front flux barrier 35f.

The absolute maximum value of -θs/8 in the first range is less than the absolute minimum value -θs/24 in the second range. That is, a relative location of the rear flux barrier 35r to the rear reference location θsr is disposed rotationally rearward in the circumferential direction relative to a relative location of the front flux barrier 35f to the front reference location θsf.

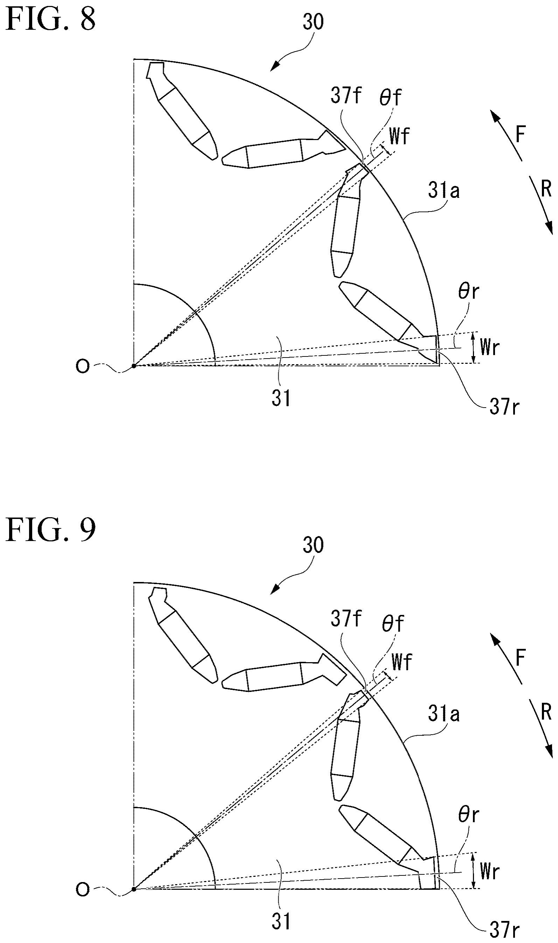

Next, the second reduction pattern will be described with reference to FIG. 8. FIG. 8 illustrates the second reduction pattern for reducing torque pulsation of the rotary electric machine 10.

As illustrated in FIG. 8, when the front bridge width Wf is θs/8 to 5θs/24 and the rear bridge width Wr is 7θs/24 to 3θs/8, the first range in which the central location θr of the rear bridge 37r is located is -θs/8 to -θs/12. The second range in which the central location θf of the front bridge 37f is located is -θs/24 to θs/12.

In accordance with the second reduction pattern, like the first reduction pattern, a circumferential width of the rear flux barrier 35r is greater than the circumferential width of the front flux barrier 35f. The relative location of the rear flux barrier 35r to the rear reference location θsr is disposed rotationally rearward in the circumferential direction relative to the relative location of the front flux barrier 35f to the front reference location θsf.

Next, the third reduction pattern will be described with reference to FIG. 9. FIG. 9 illustrates the third reduction pattern for reducing torque pulsation of the rotary electric machine 10.

As illustrated in FIG. 9, when the front bridge width Wf is θs/8 to 5θs/24 and the rear bridge width Wr is 3θs/8 to 11θs/24, the first range in which the central location θr of the rear bridge 37r is located is -θs/8 to -θs/24. The second range in which the central location θf of the front bridge 37f is located is -θs/24 to θs/12.

In accordance with the third reduction pattern, like the first reduction pattern, the circumferential width of the rear flux barrier 35r is greater than the circumferential width of the front flux barrier 35f. The relative location of the rear flux barrier 35r to the rear reference location θsr is disposed rotationally rearward in the circumferential direction relative to the relative location of the front flux barrier 35f to the front reference location θsf.

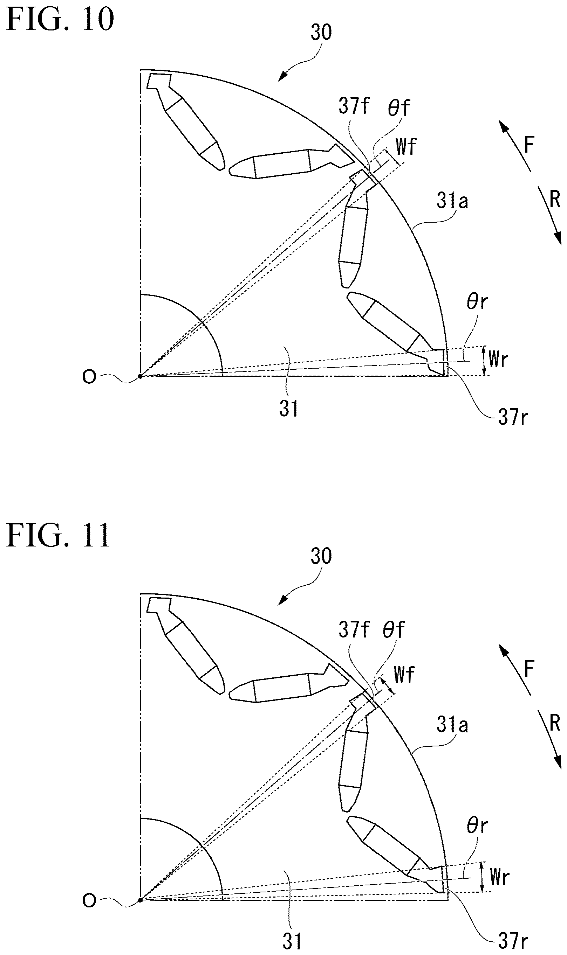

Next, the fourth reduction pattern will be described with reference to FIG. 10. FIG. 10 illustrates the fourth reduction pattern for reducing the torque pulsation of the rotary electric machine 10.

As illustrated in FIG. 10, when the front bridge width Wf is 5θs/24 to 7θs/24 and the rear bridge width Wr is 7θs/24 to 3θs/8, the first range in which the central location θr of the rear bridge 37r is located is -θs/6 to -θs/8. The second range in which the central location θf of the front bridge 37f is located is -θs/24 to θs/12.

In accordance with the fourth reduction pattern, like the first reduction pattern, the circumferential width of the rear flux barrier 35r is greater than the circumferential width of the front flux barrier 35f. The relative location of the rear flux barrier 35r to the rear reference location θsr is disposed rotationally rearward in the circumferential direction relative to the relative location of the front flux barrier 35f to the front reference location θsf.

Next, the fifth reduction pattern will be described with reference to FIG. 11. FIG. 11 illustrates the fifth reduction pattern for reducing the torque pulsation of the rotary electric machine 10.

As illustrated in FIG. 11, when the front bridge width Wf is 5θs/24 to 7θs/24 and the rear bridge width Wr is 7θs/24 to 3θs/8, the first range in which the central location θr of the rear bridge 37r is located is -θs/8 to -θs/12. The second range where the central location θf of the front bridge 37f is located is 0 to 5θs/24.

In accordance with the fifth reduction pattern, like the first reduction pattern, the circumferential width of the rear flux barrier 35r is greater than the circumferential width of the front flux barrier 35f. The relative location of the rear flux barrier 35r to the rear reference location θsr is disposed rotationally rearward in the circumferential direction relative to the relative location of the front flux barrier 35f to the front reference location θsf.

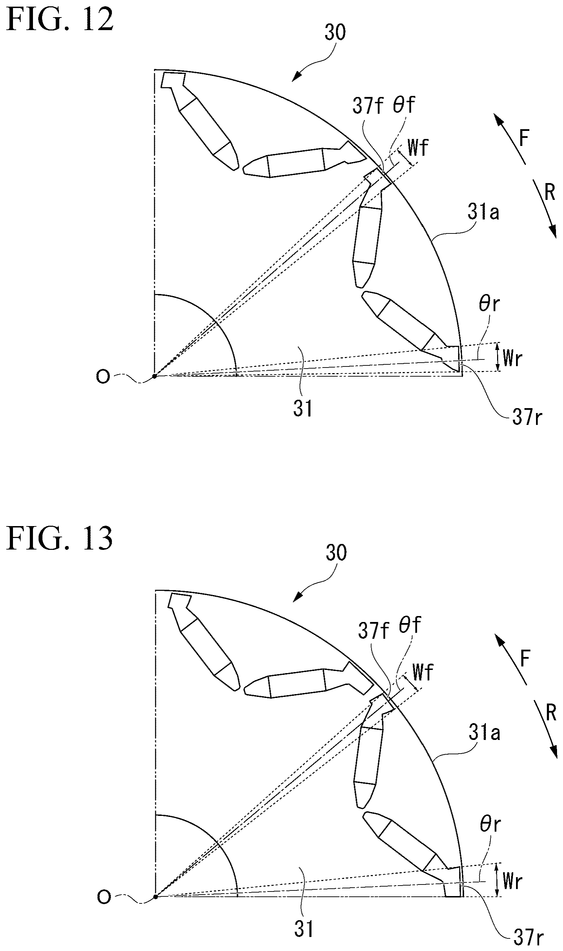

Next, the sixth reduction pattern will be described with reference to FIG. 12. FIG. 12 illustrates the sixth reduction pattern for reducing the torque pulsation of the rotary electric machine 10.

As illustrated in FIG. 12, when the front bridge width Wf is 5θs/24 to 7θs/24 and the rear bridge width Wr is 7θs/24 to 3θs/8, the first range in which the central location θr of the rear bridge 37r is located is -θs/12 to -θs/24. The second range where the central location θf of the front bridge 37f is located is θs/24 to 5θs/24.

In accordance with the sixth reduction pattern, like the first reduction pattern, the circumferential width of the rear flux barrier 35r is greater than the circumferential width of the front flux barrier 35f. The relative location of the rear flux barrier 35r to the rear reference location θsr is disposed rotationally rearward in the circumferential direction relative to the relative location of the front flux barrier 35f to the front reference location θsf.

Next, the seventh reduction pattern will be described with reference to FIG. 13. FIG. 13 illustrates the seventh reduction pattern for reducing torque pulsation of the rotary electric machine 10.

As illustrated in FIG. 13, when the front bridge width Wf is 5θs/24 to 7θs/24 and the rear bridge width Wr is 3θs/8 to 11θs/24, the first range in which the central location θr of the rear bridge 37r is located is -θs/6 to -θs/8. The second range where the central location θf of the front bridge 37f is located is -θs/12 to 0.

In accordance with the seventh reduction pattern, like the first reduction pattern, the circumferential width of the rear flux barrier 35r is greater than the circumferential width of the front flux barrier 35f. The relative location of the rear flux barrier 35r to the rear reference location θsr is disposed rotationally rearward in the circumferential direction relative to the relative location of the front flux barrier 35f to the front reference location θsf.

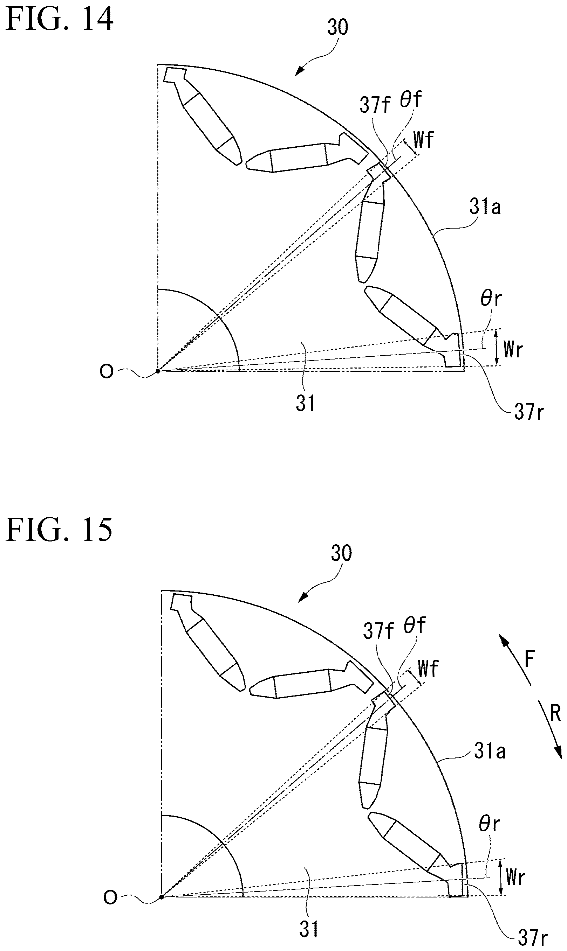

Next, the eighth reduction pattern will be described with reference to FIG. 14. FIG. 14 illustrates the eighth reduction pattern for reducing the torque pulsation of the rotary electric machine 10.

As illustrated in FIG. 14, when the front bridge width Wf is 5θs/24 to 7θs/24 and the rear bridge width Wr is 3θs/8 to 11θs/24, the first range in which the central location θr of the rear bridge 37r is located is -θs/8 to -θs/12. The second range in which the central location θf of the front bridge 37f is located is -θs/12 to θs/24.

In accordance with the eighth reduction pattern, like the first reduction pattern, the circumferential width of the rear flux barrier 35r is greater than the circumferential width of the front flux barrier 35f. The relative location of the rear flux barrier 35r to the rear reference location θsr is disposed rotationally rearward in the circumferential direction relative to the relative location of the front flux barrier 35f to the front reference location θsf.

Next, the ninth reduction pattern will be described with reference to FIG. 15. FIG. 15 illustrates the ninth reduction pattern for reducing the torque pulsation of the rotary electric machine 10.

As illustrated in FIG. 15, when the front bridge width Wf is 5θs/24 to 7θs/24 and the rear bridge width Wr is 3θs/8 to 11θs/24, the first range in which the central location θr of the rear bridge 37r is located is -θs/12 to -θs/24. The second range in which the central location θf of the front bridge 37f is located is -θs/24 to θs/8.

In accordance with the ninth reduction pattern, like the first reduction pattern, the circumferential width of the rear flux barrier 35r is greater than the circumferential width of the front flux barrier 35f. The relative location of the rear flux barrier 35r to the rear reference location θsr is disposed rotationally rearward in the circumferential direction relative to the relative location of the front flux barrier 35f to the front reference location θsf.

As described in the first to ninth reduction patterns of FIGS. 7 to 15, in order to reduce torque pulsation of the rotary electric machine 10, the circumferential width of the rear flux barrier 35r is formed to be greater than the circumferential width of the front flux barrier 35f. The relative location of the rear flux barrier 35r to the rear reference location θsr is disposed rotationally rearward in the circumferential direction relative to the relative location of the front flux barrier 35f to the front reference location θsf.

Here, the first to ninth reduction patterns in FIGS. 7 to 15 are obtained by optimizing the positions and widths of the front flux barrier 35f and the rear flux barrier 35r provided in the rotor 30 that has the reference shape illustrated in FIG. 4. That is, in the first to ninth reduction patterns, the torque pulsation [%]/average torque [Nm] is set as an evaluation value, and an evaluation value is superior among target shapes shown in Table 1. Here, the torque pulsation is a ratio of a half width of a local maximum value and a minimum value of the torque to the average torque. The average torque is a numerical value obtained by time-averaging the torque.

Table 1 shows a change in an evaluation value for the reference shape. That is, a value of "evaluation value (torque pulsation [%]/average torque [Nm]) in a certain shape - evaluation value (torque pulsation [%]/average torque [Nm]) in a reference shape" is indicated.

In Table 1, a superior value is indicated by "Good" and an inferior value is indicated by "Unacceptable". When a change in the evaluation value with respect to a reference shape is "-" (negative), that is, the torque pulsation decreases with respect to the reference shape, the value is indicated as "Good". The evaluation value indicated by "Unacceptable" is a case where the change in the evaluation value with respect to the reference shape is "+" (positive), that is, the torque pulsation increases with respect to the reference shape. When it can be determined that the change in the evaluation value with respect to the reference shape becomes a positive value based on values of surrounding examples in Table 1, the value is indicated as "unacceptable" without calculating the evaluation value. For these, a value of change in the evaluation value with respect to the reference shape is not described. All the evaluation values were inferior to the reference shape outside of the range shown in Table 1.

[Table 1]

| | $-\frac{\theta_s}{12} \le \theta_f < -\frac{\theta_s}{24}$ | $-\frac{\theta_s}{24} \le \theta_f < 0$ | $0 \le \theta_f < \frac{\theta_s}{24}$ | $\frac{\theta_s}{24} \le \theta_f < \frac{\theta_s}{12}$ | $\frac{\theta_s}{12} \le \theta_f < \frac{\theta_s}{8}$ | $\frac{\theta_s}{8} \le \theta_f < \frac{\theta_s}{6}$ | $\frac{\theta_s}{6} \le \theta_f \le \frac{5}{24}\theta_s$ |
|---|---|---|---|---|---|---|---|
| $-\frac{\theta_s}{6} \le \theta_r < -\frac{\theta_s}{8}$ | (1) +3.3% Unacceptable<br>(2) Unacceptable<br>(3) +8.1% Unacceptable<br>(4) **-25.6%** Good | (1) **-33.5%** Good<br>(2) Unacceptable<br>(3) **-34.0%** Good<br>(4) **-1.7%** Good | (1) **-19.3%** Good<br>(2) Unacceptable<br>(3) **-24.0%** Good<br>(4) +30.2% Unacceptable | (1) +8.2% Unacceptable<br>(2) +16.5% Unacceptable<br>(3) **-12.7%** Good<br>(4) Unacceptable | (1) Unacceptable<br>(2) Unacceptable<br>(3) +0.8% Unacceptable<br>(4) Unacceptable | (1) Unacceptable<br>(2) Unacceptable<br>(3) Unacceptable<br>(4) Unacceptable | (1) Unacceptable<br>(2) Unacceptable<br>(3) Unacceptable<br>(4) Unacceptable |
| $-\frac{\theta_s}{8} \le \theta_r < -\frac{\theta_s}{12}$ | (1) Unacceptable<br>(2) +8.1% Unacceptable<br>(3) Unacceptable<br>(4) **-4.3%** Good | (1) **-9.5%** Good<br>(2) **-6.8%** Good<br>(3) +8.6% Unacceptable<br>(4) **-29.3%** Good | (1) **-33.0%** Good<br>(2) **-26.5%** Good<br>(3) **-16.2%** Good<br>(4) **-2.0%** Good | (1) **-12.4%** Good<br>(2) **-31.2%** Good<br>(3) **-21.8%** Good<br>(4) +5.2% Unacceptable | (1) +8.9% Unacceptable<br>(2) +5.4% Unacceptable<br>(3) **-14.1** % Good<br>(4) Unacceptable | (1) Unacceptable<br>(2) Unacceptable<br>(3) -7.7% Good<br>(4) Unacceptable | (1) Unacceptable<br>(2) Unacceptable<br>(3) **-1.2%** Good<br>(4) Unacceptable |
| $-\frac{\theta_s}{12} \le \theta_r \le -\frac{\theta_s}{24}$ | (1) Unacceptable<br>(2) Unacceptable<br>(3) Unacceptable<br>(4) +0.6% Unacceptable | (1) Unacceptable<br>(2) **-1.0%** Good<br>(3) Unacceptable<br>(4) **-15.9%** Good | (1) +4.7% Unacceptable<br>(2) **-18.7%** Good<br>(3) +0.6% Unacceptable<br>(4) **-18.2%** Good | (1) +12.5% Unacceptable<br>(2) **-15.4%** Good<br>(3) **-2.8%** Good<br>(4) -15.9% Good | (1) Unacceptable<br>(2) +0.0% Unacceptable<br>(3) **-12.8%** Good<br>(4) **-8.0%** Good | (1) Unacceptable<br>(2) Unacceptable<br>(3) **-8.7%** Good<br>(4) +0.0% Unacceptable | (1) Unacceptable<br>(2) Unacceptable<br>(3) **-2.2%** Good<br>(4) Unacceptable |

12

In Table 1, [○1], [○2], [○3], and [○4] indicate the following ranges in the front bridge width Wf and the rear bridge width Wr. A character string in which a number is written after ○ such as [○1] means that a number is written in ○ in Table 1.

[○1]: the front bridge width Wf is θs/8 to 5θs/24 and rear bridge width Wr is 7θs/24 to 3θs/8
[○2]: the front bridge width Wf is θs/8 to 5θs/24 and rear bridge width Wr is 3θs/8 to 11θs/24
[○3]: the front bridge width Wf is 5θs/24 to 7θs/24 and the rear bridge width Wr is 7θs/24 to 3θs/8
[○4]: the front bridge width Wf is 5θs/24 to 7θs/24 and the rear bridge width Wr is 3θs/8 to 11θs/24

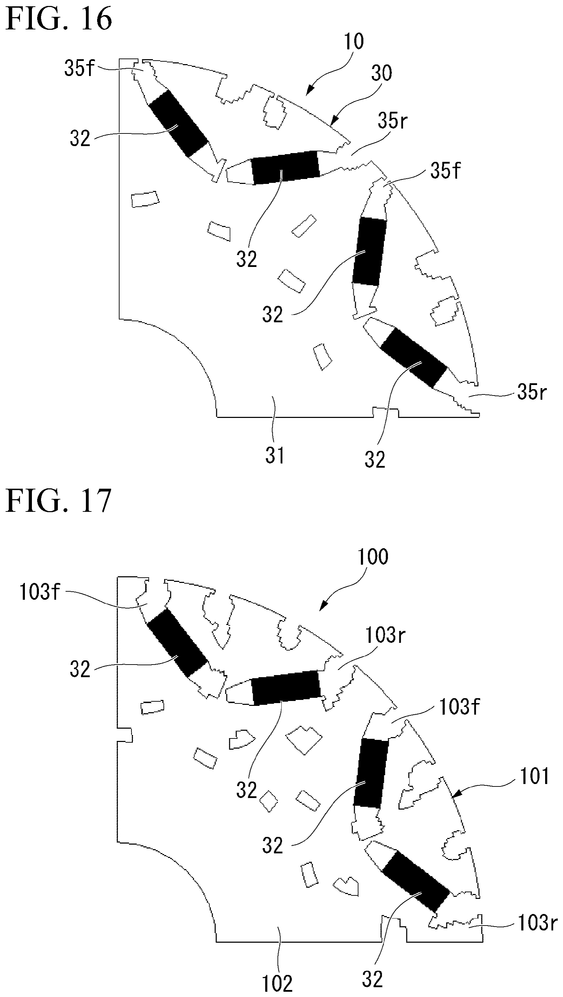

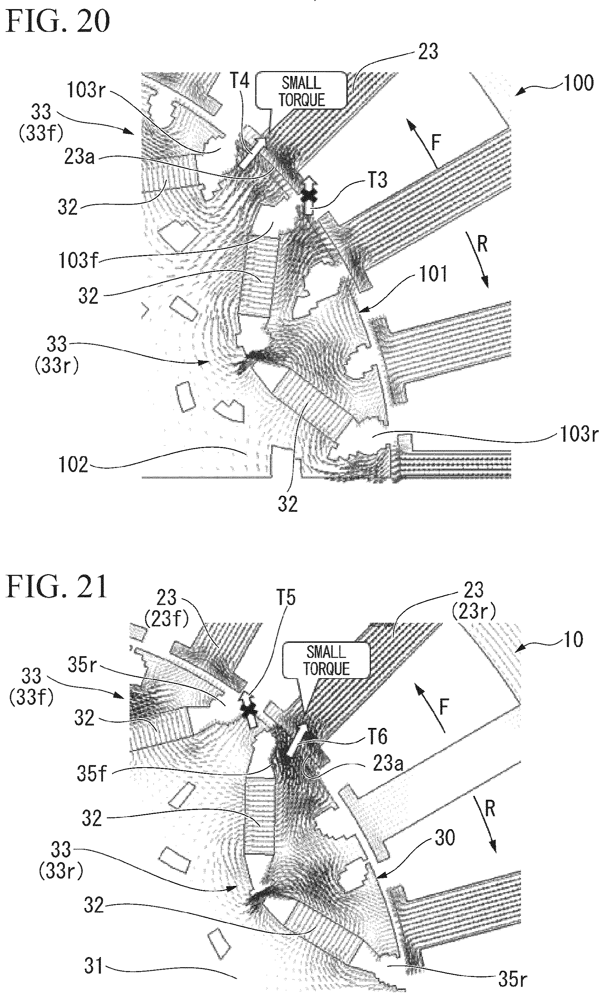

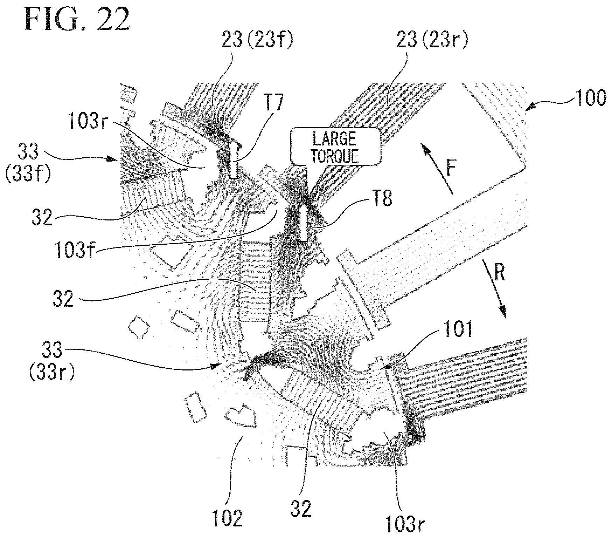

Next, an example in which torque pulsation is compared between the rotary electric machine 10 according to the embodiment and the rotary electric machine 100 according to Comparative Example will be described with reference to FIGS. 16 to 18.

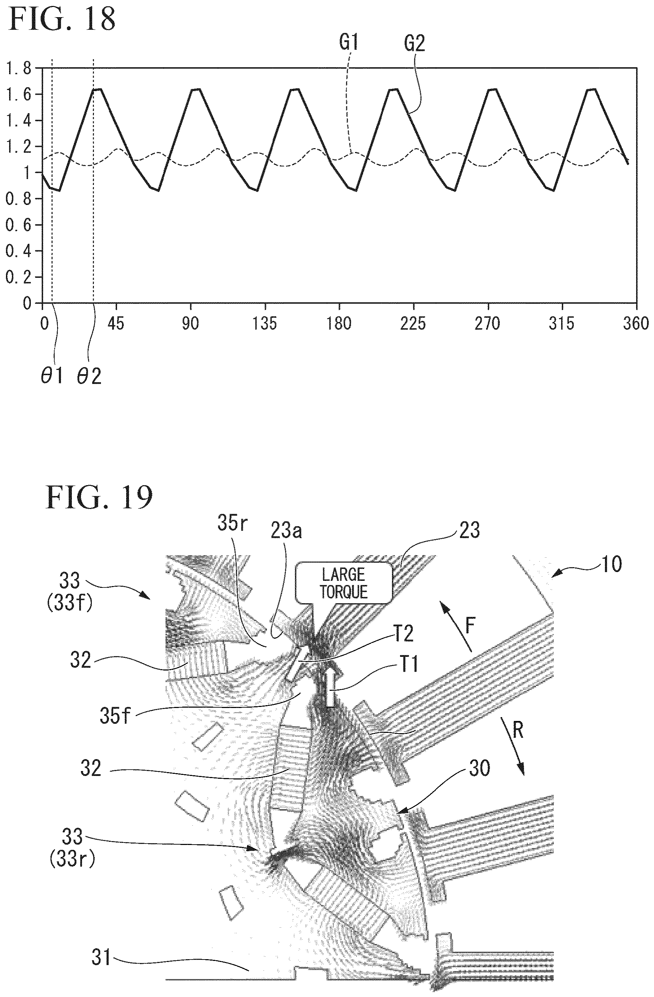

FIG. 16 illustrates the rotor 30 capable of optimally reducing torque pulsation in the rotary electric machine 10 according to the embodiment. FIG. 17 illustrates a rotor 101 in which an average torque becomes the maximum in the rotary electric machine 100 according to Comparative Example. FIG. 18 is a graph illustrating a relationship (torque waveform) between an electric angle and torque between the rotary electric machine 10 according to the embodiment and a rotary electric machine 110 according to Comparative Example. In FIG. 18, the vertical axis represents the torque (Nm), and the horizontal axis represents the electric angle (°). The shapes of the rotors 30 and 112 were obtained based on an analysis method described in Japanese Patent Application Laid-Open No. 2021-114099.
In FIG. 18, a graph G1 shows a torque waveform of the rotary electric machine 10 according to the embodiment. A graph G2 shows a torque waveform of the rotary electric machine 100 according to Comparative Example. By comparing the torque waveform of the graph G1 with the torque waveform of the graph G2, it can be confirmed that the torque pulsation of the graph G1 is considerably less than the torque pulsation of the graph G2. Accordingly, it can be confirmed that the torque pulsation of the rotary electric machine 10 according to the embodiment is considerably less than the torque pulsation of the rotary electric machine 100 according to Comparative Example.
Next, a magnetic flux density vector in the rotary electric machine 10 according to the embodiment illustrated in FIG. 16 and the rotary electric machine 100 according to Comparative Example illustrated in FIG. 17 will be described with reference to FIGS. 19 to 22.
First, in FIGS. 19 and 20, a magnetic flux density vector generated when the rotor 30 according to the embodiment and the rotor 101 according to Comparative Example are located at an electric angle θ1 at which the torque waveform of the rotary electric machine 100 according to Comparative Example shown by the graph G2 of FIG. 18 becomes the minimum will be described. Hereinafter, two magnetic poles 33 adjacent in the circumferential direction will be focused on. The teeth 23 are disposed between these two magnetic poles 33. A flow of the magnetic flux generated in the two magnetic poles 33 with respect to the teeth 23 will be described below.
FIG. 19 is a diagram illustrating a magnetic flux density vector when the rotor 30 is located at the electric angle θ1 in the rotary electric machine 10 according to the embodiment.
As illustrated in FIG. 19, in the rotary electric machine 10 of the embodiment, of the two magnetic poles 33 described above, the rear flux barrier 35r at the magnetic pole 33 located in the front F (hereinafter also referred to as a front magnetic pole 33f) blocks the magnetic flux path from the permanent magnet 32 included in the front magnetic pole 33f to the front surface 23a of the teeth 23. Further, of the two magnetic poles 33 described above, the front flux barrier 35f at the magnetic pole 33 located at the rear R (hereinafter also referred to as rear magnetic pole 33r) does not block the magnet magnetic flux from the permanent magnet 32 included in the rear magnetic pole 33r to the teeth 23. Accordingly, the torque on the front F tends to increase when the torque is minimum. A torque T1 and a torque T2 on the front F can be appropriately guaranteed. Accordingly, the rotary electric machine 10 according to the embodiment can curb a reduction in torque at the electric angle θ1 as illustrated in the graph G1 of FIG. 18.
FIG. 20 is a diagram illustrating a magnetic flux density vector when the rotor 101 is located at the electric angle θ1 in the rotary electric machine 100 according to Comparative Example.
As illustrated in FIG. 20, in the rotary electric machine 100 according to Comparative Example, a front flux barrier 103f in the rear magnetic pole 33r between two magnetic poles 33 blocks a magnetic flux path entering from the permanent magnet 32 included in the rear magnetic pole 33r to the teeth 23. Accordingly, the torque T3 from the rear R acting on the teeth 23 is significantly reduced. Further, a rear flux barrier 103r in the front magnetic pole 33f between the two magnetic poles 33 described above is located on the front F as compared with the rotary electric machine 10 according to the embodiment, and a magnetic flux path entering the front surface 23a of the teeth 23 from the rotor 101 is widened, and thus the magnetic flux easily enters the front surface 23a of the teeth 23 in the radial direction (substantially parallel to the radial direction). Accordingly, a component in the radial direction of a torque T4 generated by the magnetic flux increases, and a component toward the front F decreases. Therefore, in the rotary electric machine 100 according to Comparative Example, as illustrated in the graph G2 of FIG. 18, the torque at the electric angle θ1 becomes the minimum value.
Next, in FIGS. 21 and 22, a magnetic flux density vector generated when the rotor 30 according to the embodiment and the rotor 101 according to Comparative Example are positioned at an electric angle θ2 at which a torque waveform of the rotary electric machine 100 according to Comparative Example shown by the graph G2 of FIG. 18 becomes the maximum will be described. Hereinafter, two magnetic poles 33 adjacent in the circumferential direction will be focused on. Of the two magnetic poles 33, the teeth 23 are each disposed closer to the rear R of the magnetic pole 33 on the front F and closer to the front F of the magnetic pole 33 on the rear R. A flow of the magnetic flux generated in the two magnetic poles 33 with respect to the two teeth 23 will be described below.

FIG. 21 is a diagram illustrating a magnetic flux density vector when the rotor 30 is located at the electric angle θ2 in the rotary electric machine 10 according to the embodiment.

As illustrated in FIG. 21, in the rotary electric machine 10 according to the embodiment, the rear flux barrier 35r in the front magnetic pole 33f between the two magnetic poles 33 described above blocks a magnetic flux path entering from the rear R to the teeth 23 (hereinafter also referred to as front teeth 23f) located on the front F between the two teeth 23. Accordingly, torque T5 from the rear R acting on the front teeth 23f is significantly reduced. Further, the front flux barrier 35f in the rear magnetic pole 33r between the two magnetic poles 33 does not block the magnetic flux path entering from the rotor 30 to the front surface 23a of the teeth 23 (hereinafter also referred to as rear teeth 23r) located on the rear R between the two teeth 23. Accordingly, the magnetic flux path on the front surface 23a of the rear teeth 23r can be widened. By widening the magnetic flux path, the magnetic flux enters in the radial direction (substantially parallel to the radial direction) from the front surface 23a of the rear teeth 23r. A component in the radial direction of torque T6 generated by the magnetic flux increases, and a component toward the front F decreases. Accordingly, the torque on the front F can be curbed to be small when the torque becomes the maximum, and thus the rotationally forward torque can be curbed.

As described above, the rotationally forward torque is guaranteed appropriately when the torque becomes the minimum, and the rotationally forward torque is curbed when the torque becomes the maximum, which can reduce the torque pulsation of the IPMSM.

FIG. 22 is a diagram illustrating a magnetic flux density vector when the rotor 101 is located at the electric angle θ2 in the rotary electric machine 100 according to Comparative Example.

As illustrated in FIG. 22, in the rotary electric machine 100 according to Comparative Example, the rear flux barrier 103r in the front magnetic pole 33f between the two magnetic poles 33 does not block the magnetic flux path entering from the permanent magnet 32 included in the front magnetic pole 33f to the front teeth 23f between the two teeth 23. Accordingly, torque T7 on the front F increases. Further, the front flux barrier 103f in the rear magnetic pole 33r of the two magnetic poles 33 does not block the magnetic flux path entering from the permanent magnet 32 included in the rear magnetic pole 33r to the rear teeth 23r of the two teeth 23. Accordingly, the torque T8 in the front F increases. Therefore, in the rotary electric machine 100 according to Comparative Example, as illustrated in the graph G2 of FIG. 18, the torque at the electric angle θ2 becomes the local maximum value.

As described above, in the rotary electric machine 100 according to Comparative Example, as illustrated in the graph G2 of FIG. 18, the torque at the electric angle θ1 becomes the minimum value, and the torque at the electric angle θ2 becomes the local maximum value. As a result, in the rotary electric machine 100 according to Comparative Example, a difference between the maximum torque and the minimum torque increases, and thus torque pulsation increases.

In FIGS. 16 to 22, the state in which the bridge 37 is not provided in the rotor core 31 according to the embodiment and the state in which no bridge is provided in the rotor core 102 according to Comparative Example have been described. Here, a similar effect can be obtained even when the rotor core 31 and the rotor core 102 are modified to be realizable by providing bridges. Accordingly, it is possible to utilize the rotor core 31 including the bridge 37.

According to the rotor core 31, the rotor 30, the rotary electric machine 10, and the designing method for the rotor core 31 according to the above-described embodiment, it is possible to obtain the following effects.

Here, the inventors of the present application have found that the torque pulsation of the IPMSM can be reduced by designing the positions and shapes of the front flux barrier 35f and the rear flux barrier 35r based on a magnetic flux in the magnetic pole 33.

Accordingly, the designing method for the rotor core 31 includes a step of designing the positions and shapes of the front flux barrier 35f and the rear flux barrier 35r. Specifically, in the step of the designing method for the rotor core 31, as illustrated in FIG. 19, when the torque becomes the minimum, the rear flux barrier 35r blocks the magnetic flux path of the front surface 23a of the teeth 23 (the front surface 23a of the teeth 23 located between the two magnetic poles 33 described above) located closest to the rear flux barrier 35r. Further, the front flux barrier 35f does not block the magnetic flux oriented from the rear R to the teeth 23 located closest to the front flux barrier 35f.

As illustrated in FIG. 21, when the torque becomes the maximum, the rear flux barrier 35r blocks the magnetic flux path entering from the rear R to the teeth 23 (the front teeth 23f) located closest to the rear flux barrier 35r, and the front flux barrier 35f widens the magnetic flux path on the front surface 23a of the teeth 23 (the front surface 23a of the rear teeth 23r) located closest to the front flux barrier 35f.

In the step of the designing method for the rotor core 31, the central location θf of the front bridge 37f and the central location θr of the rear bridge 37r are disposed at positions that are asymmetric with respect to the reference line Ld that passes through the circumferential center of the magnetic pole 33 and extends in the radial direction of the rotor core 31. The width Wf of the front bridge 37f and the width Wr of the rear bridge 37r are set to be different.

Specifically, the relative location of the central location θr of the rear bridge 37r to the rear reference location θsr is disposed rotationally rearward relative to the relative location of the central location θf of the front bridge 37f to the front reference location θsf. Further, the width Wr of the rear bridge 37r is set to be greater than the width Wf of the front bridge 37f.

Accordingly, when the torque becomes the minimum, the rear flux barrier 35r can block the magnetic flux path of the front surface 23a of the teeth 23. Further, it is possible to prevent the front flux barrier 35f from blocking the magnet magnetic flux oriented to the teeth 23 from the rear R. Accordingly, the rotationally forward torque tends to increase when the torque becomes the minimum, and the rotationally forward torque can be appropriately guaranteed.

Conversely, when the torque becomes the maximum, the rear flux barrier 35r can block the magnetic flux path entering the teeth 23 from the rear R. Further, the magnetic flux path on the front surface 23a of the teeth 23 can be widened by preventing the front flux barrier 35f from blocking the magnetic flux path on the front surface 23a of the teeth 23. By widening the magnetic flux path on the front surface 23a of the teeth 23, it is possible to reduce the torque on the front F. Accordingly, the torque on the front F can be curbed when the torque becomes the maximum.

In this way, by appropriately guaranteeing the torque on the front F when the torque becomes the minimum and curbing the torque on the front F when the torque becomes the maximum, it is possible to reduce the torque pulsation of the IPMSM.

In the first to ninth reduction patterns of FIGS. 7 to 15, the circumferential width of the rear flux barrier 35r is greater than the circumferential width of the front flux barrier 35f. The relative location of the central location θr of the rear bridge 37r to the rear reference location θsr is disposed rotationally rearward relative to the relative location of the central location θf of the front bridge 37f to the front reference location θsf.

Accordingly, when the torque becomes the minimum, the rear flux barrier 35r can block the magnetic flux path of the front surface 23a of the teeth 23. Further, it is possible to prevent the front flux barrier 35f from blocking the magnet magnetic flux oriented to the teeth 23 from the rear R. Accordingly, the rotationally forward torque tends to increase when the torque becomes the minimum, and the rotationally forward torque can be appropriately guaranteed.

Conversely, when the torque becomes the maximum, the rear flux barrier 35r can block the magnetic flux path entering the teeth 23 from the rear R. Further, the magnetic flux path on the front surface 23a of the teeth 23 can be widened by preventing the front flux barrier 35f from blocking the magnetic flux path on the front surface 23a of the teeth 23. By widening the magnetic flux path on the front surface 23a of the teeth 23, it is possible to reduce the torque on the front F. Accordingly, the torque on the front F can be curbed when the torque becomes the maximum.

In this way, by appropriately guaranteeing the torque on the front F when the torque becomes the minimum and curbing the torque on the front F when the torque becomes the maximum, it is possible to reduce the torque pulsation of the IPMSM.

The technical scope of the present invention is not limited only to the above-described embodiments, and various modifications can be made without departing from the gist of the present invention.

The shape of the stator 20 is not limited only to the forms described in the above-described embodiment. Specifically, the dimensions of the outer and inner diameters of the stator core 21, the stacking thickness, the number of slots, a dimensional proportion between the circumferential direction and the radial direction of the teeth 23, a dimensional proportion between the teeth 23 and the core back 22 in the radial direction, and the like can be arbitrarily designed according to desired characteristics of the rotary electric machine 10.

The shape of the rotor 30 is not limited only to the forms described in the above-described embodiment. Specifically, the dimensions of the outer and inner diameters of the rotor core 31, the stacking thickness, the number of poles, and the like can be arbitrarily designed according to desired characteristics of the rotary electric machine 10.

In the above-described embodiment, both the stator core 21 and the rotor core 31 are stacked cores but may not be stacked cores.

The second flux barrier 36 may not be provided.

In the above embodiment, one magnetic pole 33 includes two permanent magnets 32. However, the present invention is not limited thereto. For example, one magnetic pole 33 may include one permanent magnet 32, three permanent magnets 32, or four or more permanent magnets 32. As one set of permanent magnets 32, another form including one or more permanent magnets 32 is appropriately adopted. In this case, the insertion hole 34 itself into which one permanent magnet 32 is inserted also serves as the first insertion hole 34f and the second insertion hole 34r.

For example, when one set of permanent magnets 32 is one permanent magnet 32, the one permanent magnet 32 may have a rectangular shape that is long in a direction orthogonal to the d-axis Ld in the plane view. For example, when one set of permanent magnets 32 is three permanent magnets 32 and the three permanent magnets 32 are arranged in the circumferential direction, the following disposition may be adopted. In this case, the permanent magnet 32 located at the center in the circumferential direction may have a rectangular shape that is long in a direction orthogonal to the d-axis Ld in the plane view. Further, in this case, the two permanent magnets 32 located on both sides in the circumferential direction may extend outward in the radial direction from the d-axis Ld side toward the q-axis Lq side in the plane view. In this case, of the three or more permanent magnets 32, the insertion hole 34 into which the permanent magnet 32 located foremost is inserted serves as the first insertion hole 34f, and the insertion hole 34 into which the permanent magnet 32 located rearmost is inserted serves as the second insertion hole 34r.

In addition, a component in the above-described embodiment can be appropriately replaced with a well-known component without departing from the gist of the present invention, and the above-described modification examples may be appropriately combined with each other.

INDUSTRIAL APPLICABILITY

According to the present invention, torque pulsation is reduced. Therefore, industrial applicability is significant.

REFERENCE SIGNS LIST

10 Rotary electric machine
20 Stator
21 Stator core
22 Core back
23 Teeth
23a Front surface
23f Front teeth
23r Rear Teeth
24 Slot
30 Rotor
31 Rotor core
31a Outer circumferential surface
32 Permanent magnet
32a Corner portion
32b Corner portion
33 Magnetic pole
33f Front magnetic pole
33r Rear magnetic pole
34 Insertion hole
34f First insertion hole
34r Second insertion hole
35 First flux barrier (flux barrier)
35f Front flux barrier
35fo Outer circumferential side surface
35r Rear flux barrier
35ro Outer circumferential side surface
36 Second flux barrier
37 Bridge
37f Front bridge
37r Rear bridge
50 Case
60 Rotary shaft
100 Rotary electric machine
101 Rotor
102 Rotor core
103f Front flux barrier
103r Rear flux barrier
110 Rotary electric machine
112 Rotor
F Front
Ld d-axis (reference line)
Lf Straight line
Lq q-axis
Lr Straight line

O Central axis
R Rear
Wf Front bridge width
Wr Rear bridge width
$\theta f$ Central location
$\theta r$ Central location
$\theta s$ Central angle
$\theta sf$ Front reference location
$\theta sr$ Rear reference location

**Claims**

1. A rotor core used in an interior permanent magnet motor,

   wherein a plurality of sets of permanent magnets forming magnetic poles are disposed in the rotor core in a circumferential direction of the rotor core,
   wherein a plurality of insertion holes which penetrate through the rotor core in an axial direction of the rotor core and into which the permanent magnets are inserted are formed in the rotor core,
   wherein a flux barrier which is provided corresponding to at least one magnetic pole among the plurality of magnetic poles and penetrates through the rotor core in the axial direction is formed in the rotor core,
   wherein the flux barrier includes a front flux barrier and a rear flux barrier provided corresponding to the magnetic poles,
   wherein the insertion holes include a first insertion hole into which the permanent magnet disposed closer to a rotational forward side among the magnetic poles is inserted and a second insertion hole into which the permanent magnet disposed closer to a rotational rearward side among the magnetic poles is inserted,
   wherein the front flux barrier is provided, with respect to the first insertion hole, outside in a radial direction of the rotor core and on the rotational forward side and connected to the first insertion hole,
   wherein the rear flux barrier is provided, with respect to the second insertion hole, outside in the radial direction of the rotor core and on the rotational rearward side and connected to the second insertion hole,
   wherein the rotor core includes a front bridge provided between an outer circumferential surface of the rotor core and the front flux barrier and a rear bridge provided between an outer circumferential surface of the rotor core and the rear flux barrier,
   wherein a relative location of a central location $\theta r$ of the rear bridge to a rear reference location $\theta sr$ of the rear flux barrier is located rotationally rearward relative to a relative location of a central location $\theta f$ of the front bridge to a front reference location $\theta sf$ of the front flux barrier, and
   wherein a width Wf of the front bridge is different from a width Wr of the rear bridge.

2. The rotor core according to claim 1, wherein the width Wr of the rear bridge is greater than the width Wf of the front bridge.

3. A rotor comprising:

   the rotor core according to claim 1 or 2; and
   a plurality of sets of permanent magnets embedded in the rotor core, forming a magnetic pole, and disposed in the rotor core in a circumferential direction of the rotor core.

4. A rotary electric machine comprising:

   an annular stator; and
   the rotor according to claim 3 disposed in the stator.

5. The rotary electric machine according to claim 4, wherein, when a central angle $\theta s$ per slot of the stator is $\theta s = 2\pi/N_{slot}$ [rad] (where $N_{slot}$ represents the number of slots of the stator),

   a central location $\theta r$ of the rear bridge is located within a first range indicated using the central angle $\theta s$ with respect to a rear reference location $\theta sr$ of the rear flux barrier,
   the central location $\theta f$ of the front bridge is located within a second range indicated using the central angle $\theta s$ with

respect to a front reference location θsf of the front flux barrier, and
the first and second ranges are different in accordance with a width Wf of the front bridge and a width Wr of the rear bridge.

6. The rotary electric machine according to claim 5, wherein, when the width Wf of the front bridge is θs/8 to 5θs/24 and the width Wr of the rear bridge is 7θs/24 to 3θs/8,

the first range is -θs/6 to -θs/8 and the second range is -θs/24 to θs/24, or
the first range is -θs/8 to -θs/12 and the second range is -θs/24 to θs/12.

7. The rotary electric machine according to claim 5, wherein, when the width Wf of the front bridge is θs/8 to 5θs/24 and the width Wr of the rear bridge is 3θs/8 to 11θs/24,
the first range is -θs/8 to -θs/24 and the second range is -θs/24 to θs/12.

8. The rotary electric machine according to claim 5, wherein, when the width Wf of the front bridge is 5θs/24 to 7θs/24 and the width Wr of the rear bridge is 7θs/24 to 3θs/8,

the first range is -θs/6 to -θs/8 and the second range is -θs/24 to θs/12,
the first range is -θs/8 to -θs/12 and the second range is 0 to 5θs/24, or
the first range is -θs/12 to -θs/24 and the second range is θs/24 to 5θs/24.

9. The rotary electric machine according to claim 5, wherein when the width Wf of the front bridge is 5θs/24 to 7θs/24 and the width Wr of the rear bridge is 3θs/8 to 11θs/24,

the first range is -θs/6 to -θs/8 and the second range is -θs/12 to 0,
the first range is -θs/8 to -θs/12 and the second range is -θs/12 to θs/24, or
the first range is -θs/12 to -θs/24 and the second range is -θs/24 to θs/8.

10. A designing method for the rotor core according to claim 1 or 2, the method comprising:
a step of designing a position and a shape with respect to the front flux barrier and the rear flux barrier based on a magnetic flux at the magnetic pole.

11. The designing method for the rotor core according to claim 10, wherein, in the step, the position and shape of the front and rear flux barriers are designed such that,

when torque becomes minimum, the rear flux barrier blocks a magnetic flux path in front of a tooth located closest to the rear flux barrier and the front flux barrier does not block a magnetic flux oriented from a rotational rearward side to a tooth located closest to the front flux barrier, and
when the torque becomes maximum, the rear flux barrier blocks a magnetic flux path entering the tooth located closest to the rear flux barrier from the rotational rearward side, and the front flux barrier does not block the magnetic flux path in front of the tooth located closest to the front flux barrier to widen the magnetic flux path in front of the tooth.

FIG. 1

FIG. 2

FIG. 3

# FIG. 4

# FIG. 5

EP 4 693 831 A1

# FIG. 6

# FIG. 7

22

FIG. 8

FIG. 9

FIG. 10

FIG. 11

FIG. 12

FIG. 13

FIG. 14

FIG. 15

## FIG. 16

## FIG. 17

FIG. 18

FIG. 19

## FIG. 20

## FIG. 21

FIG. 22

23 (23f)
23 (23r)
100
T7
103r
LARGE TORQUE
33 (33f)
F
32
T8
103f
R
32
101
33 (33r)
102
32
103r

## INTERNATIONAL SEARCH REPORT

| International application No. |
| --- |
| **PCT/JP2024/012602** |

### A. CLASSIFICATION OF SUBJECT MATTER

*H02K 1/276*(2022.01)i
FI: H02K1/276

According to International Patent Classification (IPC) or to both national classification and IPC

### B. FIELDS SEARCHED

Minimum documentation searched (classification system followed by classification symbols)

H02K1/276

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2010-252530 A (ASMO CO., LTD.) 04 November 2010 (2010-11-04) paragraphs [0018]-[0041], fig. 7 | 1-11 |
| A | JP 2018-11450 A (PANASONIC CORPORATION) 18 January 2018 (2018-01-18) paragraphs [0010]-[0055], fig. 9A, 9B | 1-11 |
| A | JP 2016-208805 A (DENSO CORPORATION) 08 December 2016 (2016-12-08) entire text, all drawings | 1-11 |
| A | JP 2013-70505 A (NISSAN MOTOR CO., LTD.) 18 April 2013 (2013-04-18) entire text, all drawings | 1-11 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 June 2024** | **18 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

| INTERNATIONAL SEARCH REPORT<br>Information on patent family members | | | International application No.<br>**PCT/JP2024/012602** |
| --- | --- | --- | --- |

| Patent document<br>cited in search report | Publication date<br>(day/month/year) | Patent family member(s) | Publication date<br>(day/month/year) |
| --- | --- | --- | --- |
| JP 2010-252530 A | 04 November 2010 | US 2010/0148612 A1<br>paragraphs [0069]-[0188], fig.<br>39<br>DE 102009058424 A1 | |
| JP 2018-11450 A | 18 January 2018 | (Family: none) | |
| JP 2016-208805 A | 08 December 2016 | US 2016/0322872 A1<br>entire text, all drawings | |
| JP 2013-70505 A | 18 April 2013 | CN 103023179 A | |

**EP 4 693 831 A1**

**Patent documents cited in the description**

- JP 2023060099 A
- JP 2020162379 A
- JP 2021114099 A